# EUROPEAN PATENT SPECIFICATION

(11) **EP 3 422 781 B1**
(45) Date of publication and mention of the grant of the patent: **15.09.2021**
(21) Application number: 16895942.7
(22) Date of filing: 31.03.2016
(51) Int. Cl.: H04W 68/02, H04W 76/14, H04W 4/80, H04W 68/00, H04W 88/04

(54) **PAGING METHODS AND RELATED DEVICES**
FUNKRUFVERFAHREN UND ZUGEHÖRIGE VORRICHTUNGEN
PROCÉDÉS DE RADIOMESSAGERIE ET DISPOSITIFS ASSOCIÉS

(43) Date of publication of application: 02.01.2019
(73) Proprietor: Huawei Technologies Co., Ltd., Longgang District Shenzhen, Guangdong 518129 (CN)
(72) Inventor: CAI, Yu, Shenzhen, Guangdong 518129 (CN); WANG, Da, Shenzhen, Guangdong 518129 (CN); WANG, Jian, Shenzhen, Guangdong 518129 (CN); TENNY, Nathan Edward, Shenzhen, Guangdong 518129 (CN)
(74) Representative: Körber, Martin Hans
(86) International application number: PCT/CN2016/077985
(87) International publication number: WO 2017/166161

(56) References cited:
- EP-A1- 2 426 960
- EP-A1- 2 983 440
- WO-A1-2015/139862
- WO-A2-2016/032201
- CN-A- 104 105 103
- CN-A- 104 244 412
- CN-A- 104 812 069
- CN-A- 104 854 947
- CN-A- 105 075 386
- US-A1- 2014 328 329
- US-A1- 2015 119 088

## Description

### TECHNICAL FIELD

The present invention relates to the mobile communications field, and in particular, to paging methods and related devices.

### BACKGROUND

A terminal may be connected to a network by using another terminal. For example, a low-capability terminal is connected to the network by using a high-capability terminal in a relay manner. When the low-capability terminal is connected to the network by using the high-capability terminal, power consumption of the low-capability terminal can be reduced, and a transmission rate of the low-capability terminal can be improved. Two terminals may communicate with each other through WiFi (English full name: WIreless-FIdelity), Bluetooth, or ProSe (English full name: Proximity-services).

Cellular network communication resources are reused for communication between terminals, and a base station controls a resource block used for the communication between the terminals and transmit power of the communication between the terminals. To ensure the communication between the terminals, the base station needs to obtain an occasion on which the terminals communicate with each other, and the base station reserves a resource for the occasion on which the terminals communicate with each other, so that the terminals can communicate with each other on the resource reserved by the base station.

However, if the terminals do not communicate with each other on the occasion for which the base station has reserved the resource, the resource reserved by the base station is wasted, and another terminal cannot use the resource that has been reserved by the base station. Consequently, the resource that has been reserved by the base station cannot be reused, and resource utilization is low.

WO 2016/032201 A2 discloses a method for a first device to device (D2D) user equipment supporting D2D communication to relay the communication of a second D2D user equipment.

EP 2 426 960 A1 discloses a paging method to reduce signaling overhead of system paging and to save system paging resources.

CN 104 812 069 A discloses a position management method of a terminal located outside network coverage and a paging method. The terminal can carry out D2D communication with a relay terminal, wherein the relay terminal is located within the coverage range of a network.

US 2015/119088 A1 discloses a method of performing paging by a first D2D terminal in a wireless communication system supporting D2D communication.

US 2014/328329 A1 discloses the configuration of one or multiple pools of Device-to-Device (D2D) communication resources by an eNodeB (eNB) and methods for configuring and signaling D2D communication resources by relay or out-of-coverage UEs.

CN 104 244 412 A discloses a wireless communication device is used for receiving a paging signal sent when the wireless communication device and another wireless communication device meet a preset device-to-device condition. The paging signal is used for establishing device-to-device communication between the wireless communication device and the other wireless communication device.

### SUMMARY

The present invention provides paging methods and related devices that are capable of implementing resource reusing to effectively improve resource utilization.

The present invention is defined by a paging method according to claim 1, another paging method according to claim 7, a first terminal according to claim 12 and a network side device according to claim 13.

A first aspect of embodiments of the present invention provides a paging method performed by a first terminal as according to claim 1.

A second aspect of the embodiments of the present invention provides a paging method performed by a network side device as according to claim 7.

A third aspect of the embodiments of the present invention provides a first terminal as according to claim 12.

A fourth aspect of the embodiments of the present invention provides a network side device as according to claim 13.

The embodiments of the present invention provide paging methods and related devices.

### BRIEF DESCRIPTION OF DRAWINGS

FIG. 1 is a schematic structural diagram of a communications system;
FIG. 2 is a flowchart of steps of a paging method according to an embodiment not covered by the claimed invention;
FIG. 3 is a flowchart of steps of a paging method according to another embodiment of the present invention;
FIG. 4A and FIG. 4B are a flowchart of steps of a paging method;
FIG. 5 is a schematic diagram of preamble sequence groups;
FIG. 6 is a schematic diagram of preamble sequence groups according to another embodiment not covered by the claimed invention;
FIG. 7 is a schematic diagram of preamble sequence groups according to another embodiment not covered by the claimed invention;
FIG. 8 is a schematic structural diagram of a first device; and
FIG. 9 is a schematic structural diagram of a network side device.

### DESCRIPTION OF EMBODIMENTS

An application scenario of a paging method in the embodiments is first described.

It should be noted that, in the embodiments, the application scenario of the paging method is described as an optional example, and does not constitute a limitation.

The paging method in the embodiments may be applied to D2D (English full name: Device-to-Device) communication. D2D communication is a new technology in which devices are allowed, under control of a network side device, to directly communicate with each other by reusing a cell resource. D2D communication can improve spectrum efficiency of a cellular communications system, reduce transmit power of a device, and resolve a problem of spectrum resource scarcity in a wireless communications system to some extent.

In D2D communication in which a cell resource is reused in a cellular network, devices can not only communicate with each other by using a service of the network side device, but also directly communicate with each other by using a D2D link. The network side device controls a resource block used for D2D communication and transmit power of D2D communication, to ensure that interference caused by D2D communication to current cell communication falls within an acceptable range.

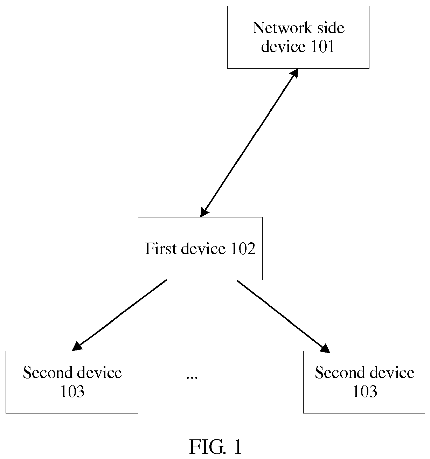

The following describes a communications system capable of implementing D2D communication in detail with reference to FIG. 1.

As shown in FIG. 1, the communications system includes a network side device 101, a first device 102, and a second device 103.

In this embodiment, the first device 102 can separately communicate with the second device 103 and the network side device 101.

For example, the first device 102 may be a device such as a smartphone or a tablet computer.

Compared with the first device 102, the second device 103 is characterized by a smaller volume, a smaller battery capacity, and also a lower radio frequency capability.

For example, the second device 103 may be a wearable device such as a wearable watch.

This embodiment sets no limitation on the first device 102 and the second device 103, provided that the first device 102 can provide a relay service for the second device 103 under control of the network side device 101 and therefore the second device 103 can be connected to the network side device 101 by using the first device 102.

An example in which the first device 102 is a smartphone and the second device 103 is a wearable watch is used for description in this embodiment.

With popularization of application of the second device 103, when the second device 103 needs to be connected to the network side device 101 to transmit data or establish a voice call service, to reduce power consumption in a process in which the second device 103 is connected to the network side device 101 so as to prolong a standby time of the second device 103, the second device 103 may be connected to the network side device 101 by using the first device 103.

A distance between the second device 103 and the first device 102 is far less than a distance between the second device 103 and the network side device 101. Therefore, connecting the second device 103 to the network side device 101 by using the first device 102 can effectively reduce power consumption of the second device 103, and can effectively improve a transmission rate of the second device 103.

It can be learned from FIG. 1 that, the first device 102 can provide a relay service for a plurality of second devices 103.

The following describes how the first device 102 pages the second device 103.

The first device 102 is connected to the network side device 101.

A specific process of connecting the first device 102 to the network side device 101 belongs to the prior art, and is not described in detail in this embodiment.

When the second device 103 does not perform a data transmission operation, in other words, when the second device 103 does not need to perform an operation of sending data or receiving data, the second device 103 is in an idle state.

If the network side device 101 or the first device 102 needs to send data to the second device 103, the network side device 101 or the first device 102 needs to page the second device 103.

The first device 101 sends a paging message to the second device 103 to page the second device 103.

The second device 103 can wake up on a paging occasion of the second device 103 and detect whether the paging message is received, and if the second device 103 determines that the paging message is received, the second device 103 may access the network side device 101 to perform an operation such as data transmission.

If the second device 103 determines that the paging message is not received, the second device 103 may continue sleeping.

When the network side device 101 needs to page the second device 103, the first device 102 provides a relay service for the second device 103. Therefore, the network side device 101 pages the second device 103 on a paging occasion by using the first device 102 that is capable of establishing a connection to the second device 103.

After the first device 102 establishes a connection to the second device 103, when the first device 102 needs to page the second device 103, the first device 102 pages the second device 103 on the paging occasion.

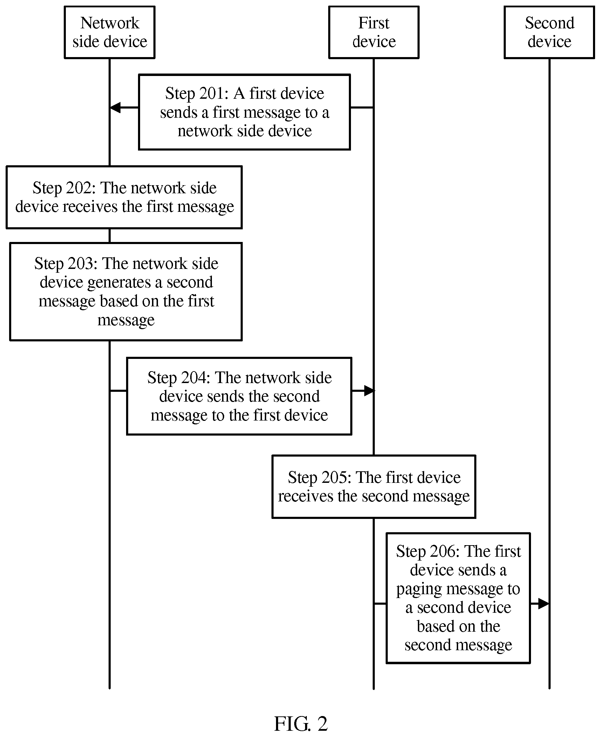

Based on the communications system shown in FIG. 1, the following describes a paging method provided in an embodiment not covered by the claimed invention with reference to FIG. 2. Resources can be fully utilized by using the paging method provided in this embodiment.

Step 201: The first device sends a first message to the network side device.

Refer to the embodiment shown in FIG. 1 for specific descriptions of the first device, the second device, and the network side device, and details are not described repeatedly in this embodiment.

The second device is connected to the network side device by using the first device. The first message is used to request the network side device to instruct the first device to page the second device.

In this embodiment, if the first device needs to page the second device, the first device needs to send the first message to the network side device, to request the network side device to instruct the first device to page the second device. The first device pages the second device only when the network side device instructs the first device to page the second device.

This embodiment sets no limitation on the first message, provided that the network side can determine, based on the first message, whether to instruct the first device to page the second device.

This embodiment sets no limitation on how the first device specifically sends the first message, provided that the first device can successfully send the first message to the network side device so that the network side device can successfully receive the first message.

Specifically, the first device uses the first message to request the network side device to determine whether to instruct the first device to page the second device.

The first message is used so that the network side device can determine, after receiving the first message, a paging occasion and/or a paging resource on which the first device pages the second device. If the network side device determines, based on the paging occasion and/or the paging resource on which the first device pages the second device, to instruct the first device to page the second device, the first device may send a paging message for paging the second device to the second device on the paging occasion of the second device and the paging resource of the second device.

The following describes an example of the first message. It should be noted that, the following description of the first message is an optional example, and does not constitute a limitation.

For example, the first message may be information that includes specific content and that is sent by the first device to the network side device.

Optionally, the first device may notify, by using the first message, the network side device of the paging occasion on which the first device sends the paging message and/or the paging resource on which the first device sends the paging message. Optionally, the first message may be further used to notify the network side device of an identifier of the first device and/or a quantity of second devices.

It can be learned that, the network side device may determine, based on the received first message, the paging occasion on which the first device sends the paging message and/or the paging resource on which the first device sends the paging message.

Optionally, the first message may further include the identifier of the first device and/or the quantity of second devices, so that the network side device can perform resource scheduling based on the first message.

Optionally, the first message may further include that the first device is to send the paging message to the second device on a next paging occasion of the second device.

It should be noted that, in this embodiment, the content included in the first message is an optional example, and does not constitute a limitation, provided that the network side device can perform resource scheduling based on the first message so that the network side device can determine whether to instruct the first device to page the second device.

For another example, the first message may not include specific content, and the network side device and the first device may agree in advance on content indicated by the first message, so that provided that the network side device receives the first message, the network side device can determine the content indicated by the first message.

This embodiment sets no limitation on the content that is indicated by the first message and on which the network side device and the first device agree in advance, provided that the network side device can perform resource scheduling based on the first message so that the network side device can determine whether to instruct the first device to page the second device.

For example, the first message may indicate that the first device is to send the paging message to the second device on a next paging occasion of the second device.

In this embodiment, the network side device performs resource scheduling based on the first message. In this embodiment, the network side device may perform resource scheduling based on the first message in the following possible scenarios.

Optionally, the network side device may reserve a resource in advance for paging the second device by the first device, so that the first device can page the second device on the resource reserved by the network side device.

The first device can notify, by using the first message, the network side device of a resource on which the first device pages the second device. If the network side device determines, by using the first message, that the first device does not page the second device on the resource reserved by the network side device, the network side device can schedule the reserved resource for another device for use, so that a resource waste is avoided.

Optionally, the network side device can further determine resource usage of the first device based on the first message, to determine whether the resource allocated to the first device can be reused by another device, so that resource utilization is improved to a greatest extent.

Step 202: The network side device receives the first message.

The network side device can determine, based on the first message, the paging occasion and/or the paging resource on which the first device pages the second device, to determine whether to instruct the first device to page the second device.

If the network side device instructs the first device to page the second device, step 203 is performed next.

If the network side device does not allow the first device to page the second device, the network side device may send indication information used to indicate that paging is not allowed to the first device.

If the network side device determines that the paging resource on which the first device sends the paging message has been reserved for another device, the network side device determines not to allow the first device to page the second device on the paging resource.

Optionally, when the network side device determines not to allow the first device to page the second device, the network side device may not send any information. When the first device determines that the first device has not received, in a specific time, a second message sent by the network side device, the first device may determine that the network side device does not allow the first device to page the second device. Step 203: The network side device generates a second message based on the first message.

When the network side device instructs the first device to page the second device, the network side device may generate the second message, where the second message is used to instruct the second device to page the second device.

Step 204: The network side device sends the second message to the first device.

Step 205: The first device receives the second message.

Step 206: The first device sends a paging message to the second device based on the second message.

In this embodiment, when the first device determines that the first device needs to page the second device, the first device needs to send the first message to the network side device. The first device sends the paging message that is used for paging to the second device only when the first device receives the second message sent by the network side device.

In this embodiment, refer to the prior art for a specific process in which the first device pages the second device by using the paging message, and details are not described in this embodiment.

It can be learned that, according to the paging method in this embodiment, if the network side device can determine, based on the first message sent by the first device, that the first device does not page the second device on the resource reserved by the network side device, optionally, the network side device may allocate the reserved resource to another device, so that a resource waste is avoided.

The network side device can further determine usage of the paging resource based on the first message. If the paging resource is not fully utilized, the network side device can further allocate the paging resource to another device that does not cause interference to the first device, so that the resource is reused, and resource utilization is effectively improved.

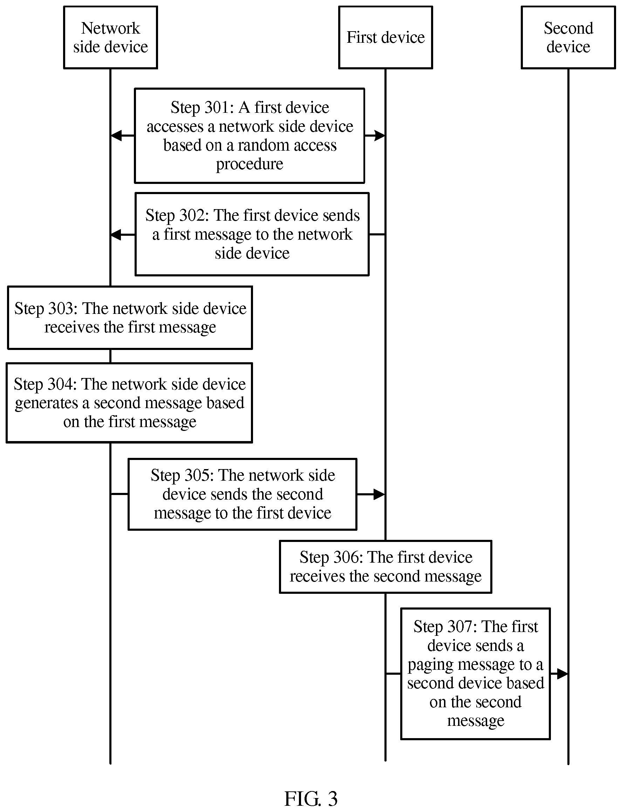

The following describes, with reference to FIG. 3, how resource scheduling is implemented if the first message is information including specific content. Specifically, the content included in the first message may be a paging occasion on which the first device sends the paging message and/or a paging resource on which the first device sends the paging message.

More specifically, the content included in the first message may be an identifier of the first device and/or a quantity of second devices.

More specifically, the content included in the first message may be that the first device is to send the paging message to the second device on a next paging occasion of the second device.

It should be noted that, in this embodiment, the content included in the first message is described as an example, and does not constitute a limitation.

Step 301: The first device accesses the network side device based on a random access procedure.

The random access procedure is that the first device requests to access the network side device, and the first device sends uplink data only after accessing the network side device.

The random access procedure includes non-contention random access and contention random access.

Refer to the prior art for a specific random access procedure, and details are not described in this embodiment.

Step 302: The first device sends a first message to the network side device.

The following describes how the first device specifically sends the first message to the network side device. It should be noted that, the following manners of sending the first message are optional examples, and do not constitute a limitation.

In a manner, step 302 is performed during execution of step 301. In other words, the first device sends the first message in the random access procedure.

According to the invention, the first device sends the first message to the network side device by using a third message Msg3 that is in the random access procedure.

Content of the third message Msg3 in the random access procedure is not fixed. According to the invention, the third message Msg3 carries a radio resource control (English full name: Radio Resource Control, RRC for short) connection request.

Optionally, the third message Msg3 may further carry some control messages.

Refer to the prior art for specific descriptions of the third message Msg3 in the random access procedure, and details are not described in this embodiment.

In this embodiment, no specific limitation is made provided that the first device sends, to the network side device, the third message Msg3 carrying the first message.

For example, the first device configures a new target radio resource control RRC message, where the target radio resource control RRC is the first message.

Therefore, the first device may use the configured target radio resource control RRC as the first message, and sends the target radio resource control RRC to the network side device by using the third message Msg3.

Refer to the embodiment shown in FIG. 2 for specific content included in the first message, and details are not described repeatedly in this embodiment.

In another manner and not covered by the claimed invention, in terms of execution order, step 302 is performed after step 301.

In other words, after the first device successfully accesses the network side device, the first device sends the first message to the network side device.

If the network side device has not allocated an uplink resource to the first device, and the first device needs to send uplink data, the first device, in an embodiment not covered by the claimed invention, sends an uplink scheduling request (English full name: Scheduling Request, SR for short) to the network side device, and network side device can determine, based on the uplink scheduling request SR, that the first device needs to send uplink data. Therefore, the network side device may allocate, to the first device, an uplink resource for sending the uplink data. In this embodiment, when the network side device has allocated the uplink resource to the first device, the first device may send the first message to the network side device by using an uplink Media Access Control protocol data unit MAC PDU.

Optionally, the first device may configure a new target radio resource control RRC message, where the target radio resource control RRC is the first message.

The first device may use the configured target radio resource control RRC as the first message, and send the target radio resource control RRC to the network side device by using the uplink Media Access Control protocol data unit MAC PDU.

Step 303: The network side device receives the first message.

Step 304: The network side device generates a second message based on the first message.

Step 305: The network side device sends the second message to the first device.

Step 306: The first device receives the second message.

Step 307: The first device sends a paging message to the second device based on the second message.

Refer to step 202 to step 206 shown in FIG. 2 for a specific process of step 303 to step 307 in this embodiment, and details are not described repeatedly in this embodiment. It can be learned that, according to the paging method in this embodiment, the first device can send the first message to the network side device in the random access procedure, or the first device can send, by using the uplink data, the first message to the network side device connected to the first device.

The network side device in this embodiment may perform resource scheduling for the first device based on the first message. Refer to the embodiment shown in FIG. 2 for details, and the details are not described repeatedly in this embodiment.

It should be noted that, in this embodiment, an example in which the first message is information including specific content is used for description, and does not constitute a limitation. For example, the first message may be a field or an identifier on which the first device and the network side device agree in advance. Provided that the first device sends the first message to the network side device, the network side device can determine the content indicated by the first message. For example, the first message indicates that the first device is to send the paging message to the second device on a next paging occasion of the second device. Certainly, the first device and the network side device may agree that the first message indicates other content. Details are not limited in this embodiment.

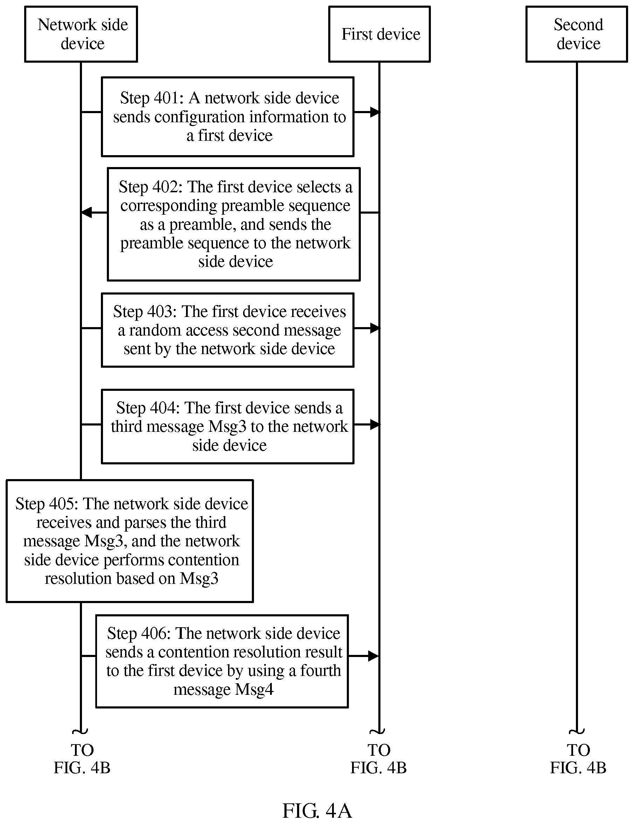

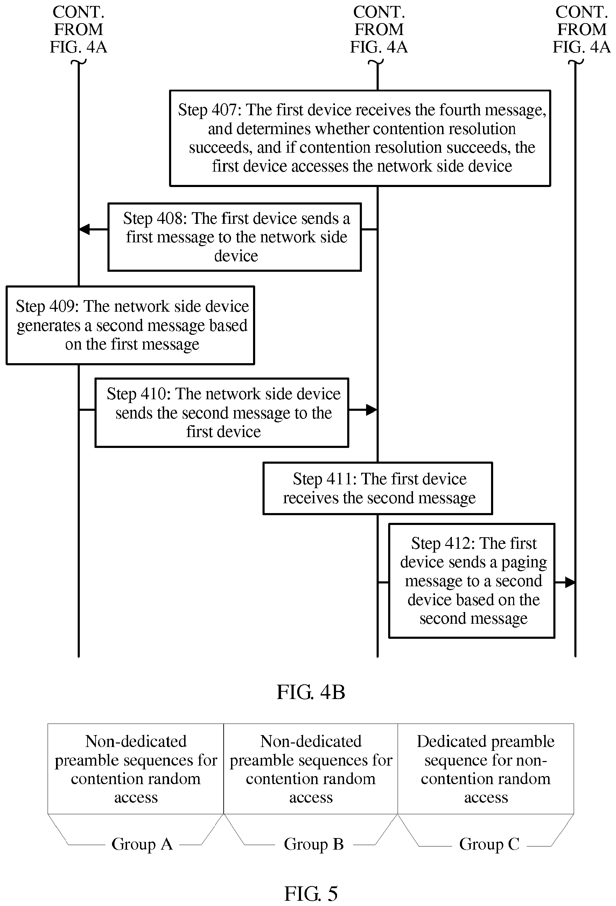

The following describes, with reference to FIG. 4A and FIG. 4B, how resource scheduling is implemented if the first message does not include specific content Step 401: The network side device sends configuration information to the first device. If the first device has not accessed the network side device, the first device needs to access the network side device based on a random access procedure.

In the random access procedure, the network side device first needs to send the configuration information to the first device.

Specifically, the network side device notifies the first device of a preamble sequence configuration manner by using the configuration information.

Optionally, for example, the network side device configures preamble sequences in three configuration manners in this embodiment. It should be noted that, in this embodiment, the preamble sequence configuration manners are optional examples, and do not constitute a limitation.

Manner 1: A Long Term Evolution (English full name: Long Term Evolution, LTE for short) system is used as an example, and in the LTE system, the network side device configures N preamble sequences for random access for each cell.

A specific quantity N of preamble sequences configured for each cell is determined by the network side device.

As shown in FIG. 5, FIG. 5 is a schematic diagram of preamble sequence groups. The N preamble sequences are classified into two main types: dedicated preamble sequences for non-contention random access and non-dedicated preamble sequences for contention random access.

The non-dedicated preamble sequences for contention random access are further divided into a group A and a group B. A group C shown in FIG. 5 is the dedicated preamble sequences for non-contention random access.

When a third message Msg3 in the random access procedure that needs to be transmitted by the first device is relatively small, the first device may randomly select a preamble sequence from the group A.

When a third message Msg3 in the random access procedure that needs to be transmitted by the first device is relatively large, the first device may randomly select a preamble sequence from the group B.

Optionally, the network side device in this embodiment may send, to the first device, the configuration information for indicating the preamble sequences shown in FIG. 5, so that the first device selects a preamble sequence.

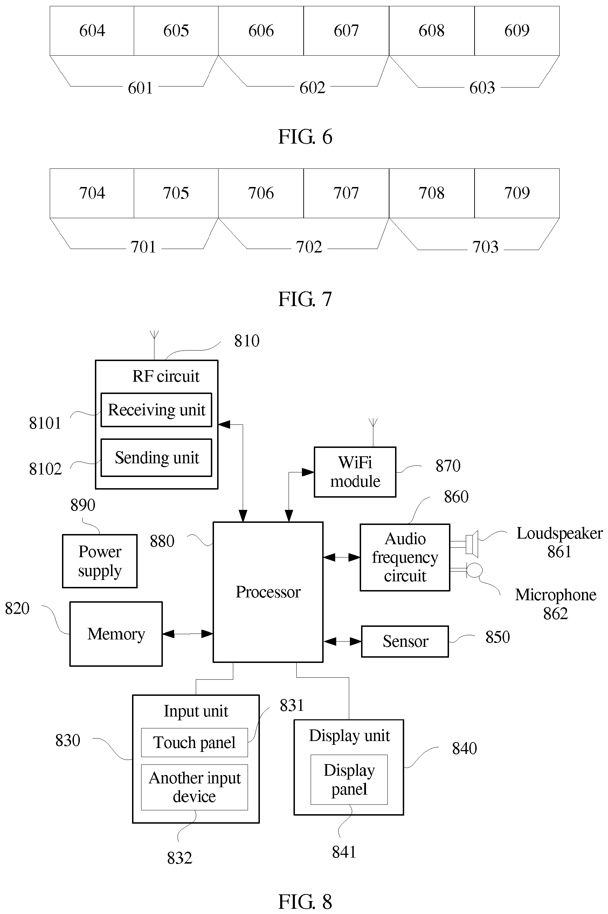

Manner 2: As shown in FIG. 6, the network side device configures a plurality of preamble sequence groups. In this embodiment not covered by the claimed invention, for example, the network side device configures three preamble sequence groups: a preamble sequence group 601, a preamble sequence group 602, and a preamble sequence group 603.

Each preamble sequence group includes a first subgroup and a second subgroup. Specifically, the preamble sequence group 601 includes a first subgroup 604 and a second subgroup 605, the preamble sequence group 602 includes a first subgroup 606 and a second subgroup 607, and the preamble sequence group 603 includes a first subgroup 608 and a second subgroup 609.

In this configuration manner, the network side device may further divide the preamble sequence groups shown in FIG. 5. Specifically, the preamble sequence group A shown in FIG. 5 is divided into two parts: the first subgroup 604 and the second subgroup 605. For another example, the preamble sequence group B shown in FIG. 5 is divided into two parts: the first subgroup 606 and the second subgroup 607. For another example, the preamble sequence group C shown in FIG. 5 is divided into two parts: the first subgroup 608 and the second subgroup 609.

More specifically, each of the first subgroup 604, the first subgroup 606, and the first subgroup 608 includes at least one first preamble sequence, and each of the second subgroup 605, the second subgroup 607, and the second subgroup 609 includes at least one second preamble sequence.

The first preamble sequence and the second preamble sequence are used by the first device to randomly access the network side device.

Specifically, in this embodiment, the second preamble sequence is the first message.

In this embodiment, the network side device notifies, by using the configuration information, the first device of the manner in which the network side device configures the preamble sequences, so that when the first device needs to send the first message to the network side device, the first device can select any second preamble sequence from the second subgroup 605, the second subgroup 607, and the second subgroup 609, and then send the selected second preamble sequence to the network side device; and the first device can further randomly access the network side device by using the selected second preamble sequence.

If the first device does not need to send the first message to the network side device, the first device may select any first preamble sequence from the first subgroup 604, the first subgroup 606, and the first subgroup 608, and the first device can randomly access the network side device by using the selected first preamble sequence.

Manner 3: As shown in FIG. 7, the network side device configures a plurality of preamble sequence groups. In this embodiment not covered by the claimed invention, for example, the network side device configures three preamble sequence groups: a preamble sequence group 701, a preamble sequence group 702, and a preamble sequence group 703.

Each preamble sequence group includes a first subgroup and a second subgroup. Specifically, the preamble sequence group 701 includes a first subgroup 704 and a second subgroup 705, the preamble sequence group 702 includes a first subgroup 706 and a second subgroup 707, and the preamble sequence group 703 includes a first subgroup 708 and a second subgroup 709.

In this configuration manner, the network side device may further divide the preamble sequence groups shown in FIG. 5.

Specifically, the group A shown in FIG. 5 is the first subgroup 704 shown in FIG. 7, the group B shown in FIG. 5 is the first subgroup 706 shown in FIG. 7, and the group C shown in FIG. 5 is the first subgroup 708 shown in FIG. 7.

For example, the second subgroup 705 is newly added between the preamble sequence group A (the first subgroup 704) and the preamble sequence group B (the first subgroup 706).

For another example, the second subgroup 707 is newly added between the preamble sequence group B (the first subgroup 706) and the preamble sequence group C (the first subgroup 708).

For another example, the second subgroup 709 is newly added after the preamble sequence group C (the first subgroup 708).

More specifically, each of the first subgroup 704, the first subgroup 706, and the first subgroup 708 includes at least one first preamble sequence, and each of the second subgroup 705, the second subgroup 707, and the second subgroup 709 includes at least one second preamble sequence.

The first preamble sequence and the second preamble sequence are used by the first device to randomly access the network side device.

Specifically, in this embodiment, the second preamble sequence is the first message.

In this embodiment, the network side device notifies, by using the configuration information, the first device of the manner in which the network side device configures the preamble sequences, so that when the first device needs to send the first message to the network side device, the first device can select any second preamble sequence from the second subgroup 705, the second subgroup 707, and the second subgroup 709, and then send the selected second preamble sequence to the network side device; and the first device can further randomly access the network side device by using the selected second preamble sequence.

If the first device does not need to send the first message to the network side device, the first device may select any first preamble sequence from the first subgroup 704, the first subgroup 706, and the first subgroup 708, and the first device can randomly access the network side device by using the selected first preamble sequence.

Step 402: The first device selects a corresponding preamble sequence as a preamble, and sends the preamble sequence to the network side device.

If the first device receives the configuration information that is sent by the network side device and that is used to indicate the preamble sequences shown in FIG. 5, the first device may randomly select a preamble sequence and send the selected preamble sequence to the network side device.

If the first device receives the configuration information that is sent by the network side device and that is used to indicate the preamble sequences shown in FIG. 6, in a process of accessing the network side device, the user equipment randomly selects a second preamble sequence and sends the selected second preamble sequence to the network side device.

In this case, the user equipment may send the selected second preamble sequence that is used as the first message to the network side device.

If the first device receives the second configuration information that is sent by the network side device and that is used to indicate the preamble sequences shown in FIG. 7, in a process of accessing the network side device, the user equipment randomly selects a second preamble sequence and sends the selected second preamble sequence to the network side device.

In this case, the user equipment may send the selected second preamble sequence that is used as the first message to the network side device.

Step 403: The first device receives a random access second message sent by the network side device.

Step 404: The first device sends a third message Msg3 to the network side device. Content of the third message Msg3 in the random access procedure is not fixed. Optionally, the third message Msg3 may carry a radio resource control (English full name: Radio Resource Control, RRC for short) connection request.

Optionally, the third message Msg3 may further carry some control messages.

If the first device has not sent the preamble sequence that, in an embodiment not covered by the claimed invention, is used as the first message to the network side device in step 402, the first device sends the first message to the network side device when the first device performs step 404, as according to the invention. According to the invention, the third message Msg3 includes a radio resource control connection request RRCConnectionRequest message.

Specifically, the first device and the network side device define a new target value in an establishment cause establishmentCause field in the RRCConnectionRequest message, and the network side device and the first device agree that the target value is the first message.

This embodiment sets no limitation on the target value. For example, the target value is pagingRequest.

In this embodiment, the first device sends the target value that is in the RRCConnectionRequest message and that is used as the first message to the network side device by using the third message Msg3.

For another example, the first device and the network side device may define a new target Media Access Control control element MAC CE, where the target Media Access Control control element MAC CE is the first message.

In this embodiment, the first device may send the target MAC CE that is used as the first message to the network side device by using the third message Msg3.

For another example, the third message Msg3 includes a cell radio network temporary identifier (English full name: Radio Network Temporary Identifier, Cell RNTI for short) or a common control channel service data unit (English full name: Common Control Channel Service Data Unit, CCCH sdu for short). Either one of the two is corresponding to one subheader in a MAC PDU, and each subheader has 2 reserved bits. In the present invention, one of the 2 reserved bits is used to configure the first message.

When the first device sends Msg3, the first message is configured by using a reserved bit in the cell RNTI or the CCCH SDU in Msg3.

Step 405: The network side device receives and parses the third message Msg3, and the network side device performs contention resolution based on Msg3.

Step 406: The network side device sends a contention resolution result to the first device by using a fourth message Msg4.

Step 407: The first device receives the fourth message, and determines whether contention resolution succeeds, and if contention resolution succeeds, the first device accesses the network side device.

If the first device has not sent the first message to the network side device in a process of step 401 to step 407 in which the first device accesses the network side device based on the random access procedure, the first device in an embodiment not covered by the claimed invention may send the first message to the network side device in step 408.

Step 408: The first device sends a first message to the network side device.

For example, if the network side device has not allocated an uplink resource to the first device, and the first device needs to send uplink data, the first device sends the uplink scheduling request SR to the network side device.

In this embodiment, the uplink scheduling request SR has two functions: The network side device allocates the uplink resource to the first device. In addition, the SR is used as the first message. To be specific, the first device and the network side device agree in advance that the uplink scheduling request SR is used to indicate that the first device is to send the paging message to the second device on a next paging occasion of the second device. Therefore, after receiving the uplink scheduling request SR, the network side device may determine that the first device is to send the paging message to the second device on the next paging occasion of the second device.

For another example, if the network side device has allocated an uplink resource to the first device, when the first device needs to send uplink data, the first device sends the first message by using the uplink data.

Optionally, for example, the first device and the network side device may define a new target Media Access Control control element MAC CE, where the target Media Access Control control element MAC CE is the first message.

Optionally, the target MAC CE may be a pagingRequest CE.

In this embodiment, the first device may send the target MAC CE that is used as the first message to the network side device by using the uplink data.

Step 409: The network side device generates a second message based on the first message.

Step 410: The network side device sends the second message to the first device.

Step 411: The first device receives the second message.

Step 412: The first device sends a paging message to the second device based on the second message.

Refer to step 304 to step 307 shown in FIG. 3 for a specific process of step 409 to step 412 in this embodiment, and details are not described repeatedly in this embodiment.

According to the paging method in this embodiment, the first device and the network side device can agree in advance on content indicated by the first message, so that when the first device sends the first message to the network side device, the network side device can determine whether to instruct the first device to page the second device. It can be learned that, because the first message in this embodiment occupies a relatively small quantity of resources, transmission efficiency is improved, and a resource waste is further avoided.

The following describes a specific structure of a first device provided in an embodiment of the present invention and in embodiments not covered by the claimed invention in detail with reference to FIG. 8. The first device provided in this embodiment can implement the paging methods shown in FIG. 2 to FIG. 4A and FIG. 4B.

It can be learned from FIG. 8 that, the first device provided in this embodiment may be any terminal device such as a smartphone, a tablet computer, a PDA (English full name: Personal Digital Assistant), a POS (English full name: Point of Sale), or an in-vehicle computer.

FIG. 8 is a block diagram of a partial structure related to a first device according to an embodiment of the present invention.

The first device includes:
parts such as a radio frequency (English full name: Radio Frequency, RF for short) circuit 810, a memory 820, an input unit 830, a display unit 840, a sensor 850, an audio frequency circuit 860, a Wireless Fidelity (wireless fidelity, WiFi) module 870, a processor 880, and a power supply 890.

Persons skilled in the art may understand that the structure of the first device shown in FIG. 8 constitutes no limitation on the first device, and the first device may include more or fewer parts than those shown in FIG. 8, or a combination of some parts, or parts disposed differently.

The following describes the parts of the first device in detail with reference to FIG. 8. The RF circuit 810 may be configured to receive and send a signal in an information receiving or sending process or a call process. In particular, after receiving downlink information of a network side device, the RF circuit 810 sends the downlink information to the processor 880 for processing, and sends uplink data to the network side device.

Generally, the RF circuit 810 includes but is not limited to an antenna, at least one amplifier, a transceiver, a coupler, a low noise amplifier (Low Noise Amplifier, LNA), a duplexer, and the like.

In addition, the RF circuit 810 may further communicate with a network and another device through wireless communication.

The wireless communication may be performed by using any communication standard or protocol, including but not limited to a Global System for Mobile Communications (Global System of Mobile communication, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, a short message service (Short Messaging Service, SMS), and the like.

The memory 820 may be configured to store a software program and a software module. The processor 880 executes various functional applications and data processing of the first device by running the software program and the software module that are stored in the memory 820.

The memory 820 may mainly include a program storage area and a data storage area. The program storage area may store an operating system, an application program required by at least one function (such as an audio play function or an image play function), and the like. The data storage area may store data (such as audio data or a phonebook) created based on use of the first device, and the like. In addition, the memory 820 may include a high-speed random access memory, and may further include a non-volatile memory, for example, at least one magnetic disk storage component, a flash memory component, or another volatile solid-state storage component.

The input unit 830 may be configured to receive entered digital or character information, and generate key signal input related to user settings and function control of the first device.

Specifically, the input unit 830 may include a touch panel 831 and another input device 832. The touch panel 831, also referred to as a touchscreen, may collect a touch operation of a user on or near the touch panel 831 (for example, an operation of the user on the touch panel 831 or near the touch panel 831 by using any suitable object or accessory such as a finger or a stylus), and drive a corresponding connection apparatus based on a preset program. Optionally, the touch panel 831 may include two parts: a touch detection apparatus and a touch controller. The touch detection apparatus detects a touch orientation of the user, detects a signal brought by a touch operation, and transfers the signal to the touch controller. The touch controller receives touch information from the touch detection apparatus, converts the information into touch point coordinates, sends the touch point coordinates to the processor 880, and can receive and execute a command sent by the processor 880. In addition, the touch panel 831 may be implemented in a plurality of types, such as a resistive type, a capacitive type, an infrared type, and a surface acoustic wave type. In addition to the touch panel 831, the input unit 830 may include the another input device 832. Specifically, the another input device 832 may include but is not limited to one or more of a physical keyboard, a function key (such as a volume control key or an on-off key), a trackball, a mouse, a joystick, and the like.

The display unit 840 may be configured to display information entered by the user or information provided for the user, and various menus of the first device. The display unit 840 may include a display panel 841. Optionally, the display panel 841 may be configured in a form of a liquid crystal display (Liquid Crystal Display, LCD), an organic light-emitting diode (Organic Light-Emitting Diode, OLED), or the like. Further, the touch panel 831 may cover the display panel 841. After detecting a touch operation on or near the touch panel 831, the touch panel 831 transfers the operation to the processor 880 to determine a touch event type. Then the processor 880 provides corresponding visual output on the display panel 841 based on the touch event type. In FIG. 8, the touch panel 831 and the display panel 841 are used as two independent parts to implement input and input functions of the first device. However, in some embodiments, the touch panel 831 and the display panel 841 may be integrated to implement the input and output functions of the first device.

The first device may further include at least one sensor 850, for example, a light sensor, a motion sensor, and another sensor. Specifically, the light sensor may include an ambient light sensor and a proximity sensor. The ambient light sensor may adjust luminance of the display panel 841 based on brightness of ambient light, and the proximity sensor may turn off the display panel 841 and/or backlight when the first device moves to an ear. As a motion sensor, an accelerometer sensor may detect accelerations in all directions (three axes generally), may detect a magnitude and a direction of gravity at rest, and may be applied to an application that recognizes a first device posture (such as screen switching between portrait and landscape modes, a related game, and magnetometer posture calibration), a function related to vibration recognition (such as a pedometer or a knock), and the like. For other sensors such as a gyroscope, a barometer, a hygrometer, a thermometer, and an infrared sensor that can also be configured on the first device, details are not described herein.

The audio frequency circuit 860, a loudspeaker 861, and a microphone 862 may provide an audio interface between the user and the first device. The audio frequency circuit 860 may transmit an electrical signal converted from received audio data to the loudspeaker 861, and the loudspeaker 861 converts the electrical signal into an audio signal for output. In addition, the microphone 862 converts a collected audio signal into an electrical signal. The audio frequency circuit 860 receives the electrical signal, converts the electrical signal into audio data, outputs the audio data to the processor 880 for processing, so as to send processed audio data to, for example, another device by using the RF circuit 810, or output the audio data to the memory 820 for further processing.

WiFi belongs to a short-range wireless transmission technology. The first device may help, by using the WiFi module 870, the user receive and send emails, browse a webpage, access streaming media, and the like. The WiFi module 870 provides the user with wireless broadband Internet access. Although the WiFi module 870 is shown in FIG. 8, it may be understood that, the WiFi module 870 is not essential to the first device, and absolutely may be omitted as required without changing the essence of the present invention.

The processor 880 is a control center of the first device, and uses various interfaces and lines to connect parts of the entire first device. By running or executing the software program and/or the software module stored in the memory 820 and invoking data stored in the memory 820, the processor 880 executes various functions of the first device and processes data, so as to perform overall monitoring on the first device. Optionally, the processor 880 may include one or more processing units. Preferably, an application processor and a modem processor may be integrated into the processor 880. The application processor mainly processes an operating system, a user interface, an application program, and the like. The modem processor mainly processes wireless communication. It may be understood that, the modem processor may not be integrated into the processor 880.

The first device further includes the power supply 890 (for example, a battery) that supplies power to each part. Preferably, the power supply may be logically connected to the processor 880 by using a power management system, so that functions such as charging, discharging, and power consumption management are implemented by using the power management system.

Although not shown, the first device may also include a camera, a Bluetooth module, and the like, and details are not described herein.

In this embodiment of the present invention, the RF circuit 810 includes a receiving unit 8101 and a sending unit 8102.

The sending unit 8102 is configured to send a first message to the network side device, where the first message is used to request the network side device to instruct the first device to page a second device, and the second device is connected to the network side device by using the first device.

The receiving unit 8101 is configured to receive a second message sent by the network side device, where the second message is used to instruct the first device to page the second device.

The sending unit 8102 is further configured to send a paging message to the second device based on the second message.

The second device may be a wearable device such as a wearable watch. According to the invention, the sending unit 8102 is configured to send the first message to the network side device by using a third message Msg3 that is in a random access procedure.

Optionally, the processor 880 is configured to configure a target radio resource control RRC message, where the target radio resource control RRC message is the first message, and the processor is further configured to send the first message to the sending unit.

The sending unit 8102 is further configured to send the target radio resource control RRC message to the network side device.

Optionally, the sending unit 8102 is configured to send a target Media Access Control control element MAC CE to the network side device, where the target Media Access Control control element MAC CE is the first message.

According to the invention, the third message Msg3 sent by the sending unit 8102 includes a radio resource control connection request RRCConnectionRequest message, a target value is defined in an establishment cause establishmentCause field in the RRCConnectionRequest message, and the target value is the first message.

In an embodiment not covered by the claimed invention, the sending unit 8102 is configured to send a scheduling request SR to the network side device, where the uplink scheduling request SR is the first message. Optionally, the receiving unit 8101 is further configured to receive configuration information sent by the network side device, where the configuration information is used to indicate a plurality of preamble sequence groups configured by the network side device, each preamble sequence group includes a first subgroup and a second subgroup, the first subgroup includes at least one first preamble sequence, the second subgroup includes at least one second preamble sequence, and the first preamble sequence and the second preamble sequence are used by the first device to randomly access the network side device.

The processor 880 is configured to select any second preamble sequence based on the configuration information, where in an embodiment not covered by the claimed invention the selected second preamble sequence is the first message, and the processor is further configured to send the first message to the sending unit.

The sending unit 8102 is configured to send the selected second preamble sequence to the network side device.

Optionally, the first message sent by the sending unit 8102 is used to indicate an occasion on which the first device sends the paging message and/or a resource on which the first device sends the paging message.

Optionally, the first message sent by the sending unit 8102 is used to indicate an identifier of the first device and/or a quantity of second devices Optionally, the first message sent by the sending unit 8102 is used to indicate that the first device is to send the paging message to the second device on a next paging occasion of the second device.

Refer to the foregoing embodiments for a specific execution process in which the first device provided in this embodiment performs a paging method and beneficial effects, and details are not described repeatedly in this embodiment.

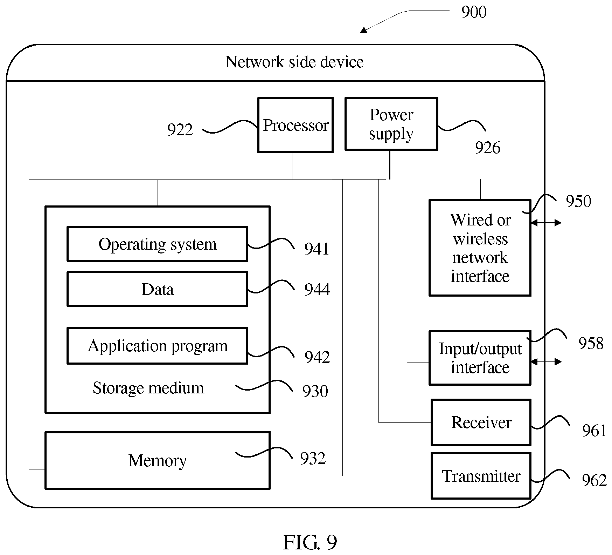

The following describes a specific structure of a network side device provided in an embodiment of the present invention in detail with reference to FIG. 9, and the network side device provided in this embodiment can implement the paging methods shown in FIG. 2 to FIG. 4A and FIG. 4B.

FIG. 9 is a schematic structural diagram of a network side device according to an embodiment of the present invention and embodiments not covered by the claimed invention. The network side device 900 may vary greatly with different configuration or performance, and may include one or more processors 922 and memories 932, and one or more storage media 930 (such as one or more mass storage devices) for storing an application program 942 or data 944.

The memory 932 and the storage medium 930 may be used for temporary storage or permanent storage. The program stored in the storage medium 930 may include one or more modules (not shown in the figure), and each module may include a series of instruction operations for the network side device. Still further, the processor 922 may be configured to communicate with the storage medium 930 and perform, in the network side device 900, the series of instruction operations in the storage medium 930.

The network side device 900 may further include one or more power supplies 926, one or more wired or wireless network interfaces 950, one or more input/output interfaces 958, and/or one or more operating systems 941, such as Windows ServerTM, Mac OS XTM, UnixTM, LinuxTM, or FreeBSDTM.

In this embodiment, the network side device further includes a receiver 961 and a transmitter 962. The receiver 961 and transmitter 962 are communicatively connected to the processor 922.

The receiver 961 is configured to receive a first message sent by a first device, where the first message is used to request the network side device to instruct the first device to page a second device, and the second device is connected to the network side device by using the first device.

Refer to the foregoing embodiments for specific descriptions of the first device and the second device, and details are not described repeatedly in this embodiment.

The processor 922 is configured to generate a second message that is used to instruct the first device to page the second device.

The transmitter 962 is configured to send the second message to the first device, so that the first device sends a paging message to the second device based on the second message.

According to the invention, the receiver 961 is configured to receive, by using a third message Msg3 that is in a random access procedure, the first message sent by the first device. Optionally, the receiver 961 is configured to receive a target radio resource control RRC message sent by the first device, where the target radio resource control RRC message is the first message configured by the first device.

Optionally, the receiver 961 is configured to receive a target Media Access Control control element MAC CE sent by the first device, where the target Media Access Control control element MAC CE is the first message.

According to the invention, the third message Msg3 received by the receiver 961 includes a radio resource control connection request RRCConnectionRequest message, a target value is defined in an establishment cause establishmentCause field in the RRCConnectionRequest message, and the target value is the first message. In an embodiment not covered by the claimed invention, the receiver 961 is configured to receive an uplink scheduling request SR sent by the first device, where the uplink scheduling request SR is the first message.

Optionally, the processor 922 is configured to generate configuration information, where the configuration information is used to indicate a plurality of preamble sequence groups configured by the network side device, each preamble sequence group includes a first subgroup and a second subgroup, the first subgroup includes at least one first preamble sequence, the second subgroup includes at least one second preamble sequence, the first preamble sequence and the second preamble sequence are used by the first device to randomly access the network side device, and the second preamble sequence is the first message in an example not covered by the claimed invention.

The transmitter 962 is configured to send the configuration information to the first device, so that the first device selects any second preamble sequence based on the configuration information.

The receiver 961 is configured to receive the selected second preamble sequence sent by the first device.

Optionally, the first message received by the receiver 961 is used to indicate a paging occasion on which the first device sends the paging message and/or a paging resource on which the first device sends the paging message.

Optionally, the first message received by the receiver 961 is used to indicate an identifier of the first device and/or a quantity of second devices.

Optionally, the first message received by the receiver 961 is used to indicate that the first device is to send the paging message to the second device on a next paging occasion of the second device.

Refer to the foregoing embodiments for a specific execution process in which the network side device provided in this embodiment performs a paging method and beneficial effects, and details are not described repeatedly in this embodiment.

It may be clearly understood by persons skilled in the art that, for the purpose of convenient and brief description, for a detailed working process of the foregoing system, apparatus, and unit, refer to a corresponding process in the foregoing method embodiments, and details are not further described herein.

The foregoing embodiments are merely intended for describing the technical solutions of the present invention.

## Claims

1. A paging method, comprising:
sending (408), by a first terminal, a first message to a network side device, wherein the first message is used to request the network side device to instruct the first terminal to page a second terminal, and the second terminal is connected to the network side device by using the first terminal providing a relay service for the second terminal;
receiving (410), by the first terminal, a second message sent by the network side device, wherein the second message is used to instruct the first terminal to page the second terminal; and
sending (412), by the first terminal, a paging message to the second terminal based on the second message,
**characterised in that** the sending, by a first terminal, a first message to a network side device comprises:
sending, by the first terminal, the first message to the network side device by using (404) a third message Msg3 that is in a random access procedure, wherein the third message Msg3 comprises a radio resource control connection request RRCConnectionRequest message, a target value is defined in an establishment cause establishmentCause field in the RRCConnectionRequest message, and the target value is the first message.

2. The method according to claim 1, wherein before the sending, by a first terminal, a first message to a network side device, the method further comprises:
configuring, by the first terminal, a target radio resource control, RRC, message, wherein the target radio resource control, RRC, message is the first message; and
the sending, by a first terminal, a first message to a network side device comprises:
sending, by the first terminal, the target radio resource control, RRC, message to the network side device.

3. The method according to claim 1, wherein the sending, by a first terminal, a first message to a network side device comprises:
sending, by the first terminal, a target Media Access Control control element, MAC CE, to the network side device, wherein the target MAC CE is the first message.

4. The method according to any one of claims 1 to 2, wherein the first message is used to indicate an occasion on which the first terminal sends the paging message and/or a resource on which the first terminal sends the paging message.

5. The method according to any one of claims 1 to 2, wherein the first message is used to indicate an identifier of the first terminal and/or a quantity of second terminals.

6. The method according to any one of claims 1 to 3, wherein the first message is used to indicate that the first terminal is to send the paging message to the second terminal on a next paging occasion of the second terminal.

7. A paging method, comprising:
receiving (408), by a network side device, a first message sent by a first terminal, wherein the first message is used to request the network side device to instruct the first terminal to page a second terminal, and the second terminal is connected to the network side device by using the first terminal providing a relay service for the second terminal;
generating (409), by the network side device, a second message that is used to instruct the first terminal to page the second terminal; and
sending (410), by the network side device, the second message to the first terminal, so that the first terminal sends a paging message to the second terminal based on the second message,
**characterised in that** the receiving, by a network side device, a first message sent by a first terminal comprises:
receiving, by the network side device, the first message sent by the first terminal by using (404) a third message Msg3 that is in a random access procedure, wherein the third message Msg3 comprises a radio resource control connection request RRCConnectionRequest message, a target value is defined in an establishment cause establishmentCause field in the RRCConnectionRequest message, and the target value is the first message.

8. The method according to claim 7, wherein the receiving, by a network side device, a first message sent by a first terminal comprises:
receiving, by the network side device, a target Media Access Control control element MAC CE sent by the first terminal, wherein the target Media Access Control control element MAC CE is the first message.

9. The method according to claim 7, wherein the first message is used to indicate a paging occasion on which the first terminal sends the paging message and/or a paging resource on which the first terminal sends the paging message.

10. The method according to claim 7, wherein the first message is used to indicate an identifier of the first terminal and/or a quantity of second terminals.

11. The method according to any one of claims 7 to 8, wherein the first message is used to indicate that the first terminal is to send the paging message to the second terminal on a next paging occasion of the second terminal.

12. A first terminal (102), comprising a radio frequency circuit, wherein the radio frequency circuit comprises a receiving unit and a sending unit;
the sending unit is configured to:
send a first message to a network side device, wherein the first message is used to request the network side device to instruct the first terminal to page a second terminal, and the second terminal is connected to the network side device by using the first terminal providing a relay service for the second terminal; and
send the first message to the network side device by using a third message Msg3 that is in a random access procedure, wherein the third message Msg3 comprises a radio resource control connection request RRCConnectionRequest message, a target value is defined in an establishment cause establishmentCause field in the RRCConnectionRequest message, and the target value is the first message;
the receiving unit is configured to receive a second message sent by the network side device, wherein the second message is used to instruct the first terminal to page the second terminal; and
the sending unit is further configured to send a paging message to the second terminal based on the second message.

13. A network side device (101), comprising a receiver, a transmitter, and a processor, wherein
the receiver is configured to:
receive a first message sent by a first terminal, wherein the first message is used to request the network side device to instruct the first terminal to page a second terminal, and the second terminal is connected to the network side device by using the first terminal providing a relay service for the second terminal; and
receive the first message to the network side device by using a third message Msg3 that is in a random access procedure, wherein the third message Msg3 comprises a radio resource control connection request RRCConnectionRequest message, a target value is defined in an establishment cause establishmentCause field in the RRCConnectionRequest message, and the target value is the first message;
the processor is configured to generate a second message that is used to instruct the first terminal to page the second terminal; and
the transmitter is configured to send the second message to the first terminal, so that the first terminal sends a paging message to the second terminal based on the second message.

## Patentansprüche

1. Aufrufverfahren, Folgendes umfassend:
Senden (408), durch ein erstes Endgerät, einer ersten Nachricht an eine netzseitige Vorrichtung, wobei die erste Nachricht verwendet wird, um die netzseitige Vorrichtung aufzufordern, das erste Endgerät anzuweisen, ein zweites Endgerät aufzurufen, und das zweite Endgerät mit der netzseitigen Vorrichtung unter Verwendung des ersten Endgeräts verbunden ist, welches einen Relay-Dienst für das zweite Endgerät bereitstellt;
Empfangen (410), durch das erste Endgerät, einer zweiten Nachricht, die durch die netzseitige Vorrichtung gesendet wird, wobei die zweite Nachricht verwendet wird, um das erste Endgerät anzuweisen, das zweite Endgerät aufzurufen; und
Senden (412), durch das erste Endgerät, einer Aufrufnachricht an das zweite Endgerät basierend auf der zweiten Nachricht, **dadurch gekennzeichnet, dass** das Senden, durch ein erstes Endgerät, einer ersten Nachricht an eine netzseitige Vorrichtung Folgendes umfasst:
Senden, durch das erste Endgerät, der ersten Nachricht an die netzseitige Vorrichtung unter Verwendung (404) einer dritten Nachricht Msg3, die sich in einem Direktzugriffsvorgang befindet, wobei die dritte Nachricht Msg3 eine Funkressourcensteuerungsverbindungsanforderungs(radio *resource control* - connection request - RRCConnectionRequest)-Nachricht umfasst, ein Zielwert in einem Einrichtungsursache(EstablishmentCause)-Feld in der RRCConnectionRequest-Nachricht definiert ist, und der Zielwert die erste Nachricht ist.

2. Verfahren nach Anspruch 1, wobei das Verfahren vor dem Senden, durch ein erstes Endgerät, einer ersten Nachricht an eine netzseitige Vorrichtung ferner Folgendes umfasst:
Konfigurieren, durch das erste Endgerät, einer Ziel-Funkressourcensteuerungs(*radio resource control* - RCC)-Nachricht, wobei die Ziel-Funkressourcensteuerungs(RCC)-Nachricht die erste Nachricht ist; und
das Senden, durch ein erstes Endgerät, einer ersten Nachricht an eine netzseitige Vorrichtung Folgendes umfasst:
Senden, durch das erste Endgerät, der Ziel-Funkressourcensteuerungs(RRC)-Nachricht an die netzseitige Vorrichtung.

3. Verfahren nach Anspruch 1, wobei das Senden, durch ein erstes Endgerät, einer ersten Nachricht an eine netzseitige Vorrichtung Folgendes umfasst:
Senden, durch das erste Endgerät, eines Ziel-Media-Access-Control-Steuerelements (*Media Access Control control element-* MAC-CE), an die netzseitige Vorrichtung, wobei das Ziel-MAC-CE die erste Nachricht ist.

4. Verfahren nach einem der Ansprüche 1 bis 2, wobei die erste Nachricht verwendet wird, um eine Gelegenheit, bei der das erste Endgerät die Aufrufnachricht sendet, und/oder eine Ressource, über die das erste Endgerät die Aufrufnachricht sendet, anzugeben.

5. Verfahren nach einem der Ansprüche 1 bis 2, wobei die erste Nachricht verwendet wird, um eine Kennung des ersten Endgeräts und/oder eine Anzahl von zweiten Endgeräten anzugeben.

6. Verfahren nach einem der Ansprüche 1 bis 3, wobei die erste Nachricht verwendet wird, um anzugeben, dass das erste Endgerät bei einer nächsten Aufrufgelegenheit des zweiten Endgeräts die Aufrufnachricht an das zweite Endgerät senden soll.

7. Aufrufverfahren, Folgendes umfassend:
Empfangen (408), durch eine netzseitige Vorrichtung, einer ersten Nachricht, die durch ein erstes Endgerät gesendet wird, wobei die erste Nachricht verwendet wird, um die netzseitige Vorrichtung aufzufordern, das erste Endgerät anzuweisen, ein zweites Endgerät aufzurufen, und das zweite Endgerät mit der netzseitigen Vorrichtung unter Verwendung des ersten Endgeräts verbunden ist, welches einen Relay-Dienst für das zweite Endgerät bereitstellt;
Erzeugen (409), durch die netzseitige Vorrichtung, einer zweiten Nachricht, die verwendet wird, um das erste Endgerät anzuweisen, das zweite Endgerät aufzurufen; und
Senden (410), durch die netzseitige Vorrichtung, der zweiten Nachricht an das erste Endgerät, sodass das erste Endgerät eine Aufrufnachricht an das zweite Endgerät basierend auf der zweiten Nachricht sendet, **dadurch gekennzeichnet, dass** das Empfangen, durch eine netzseitige Vorrichtung, einer ersten Nachricht, die durch ein erstes Endgerät gesendet wird, Folgendes umfasst:
Empfangen, durch die netzseitige Vorrichtung, der ersten Nachricht, die durch das erste Endgerät gesendet wird, unter Verwendung (404) einer dritten Nachricht Msg3, die sich in einem Direktzugriffsvorgang befindet, wobei die dritte Nachricht Msg3 eine Funkressourcensteuerungsverbindungsanforderungs(RRCConnectionRequest)-Nachricht umfasst, ein Zielwert in einem Einrichtungsursache(EstablishmentCause)-Feld in der RRCConnectionRequest-Nachricht definiert ist, und der Zielwert die erste Nachricht ist.

8. Verfahren nach Anspruch 7, wobei das Empfangen, durch eine netzseitige Vorrichtung, einer durch ein erstes Endgerät gesendeten ersten Nachricht Folgendes umfasst:
Empfangen, durch die netzseitige Vorrichtung, eines Ziel-Media-Access-Control-Steuerelements (MAC-CE), das durch das erste Endgerät gesendet wird, wobei das Ziel-Media-Access-Control-Steuerelement (MAC-CE) die erste Nachricht ist.

9. Verfahren nach Anspruch 7, wobei die erste Nachricht verwendet wird, um eine Aufrufgelegenheit, bei der das erste Endgerät die Aufrufnachricht sendet, und/oder eine Aufrufressource, über die das erste Endgerät die Aufrufnachricht sendet, anzugeben.

10. Verfahren nach Anspruch 7, wobei die erste Nachricht verwendet wird, um eine Kennung des ersten Endgeräts und/oder eine Anzahl von zweiten Endgeräten anzugeben.

11. Verfahren nach einem der Ansprüche 7 bis 8, wobei die erste Nachricht verwendet wird, um anzugeben, dass das erste Endgerät bei einer nächsten Aufrufgelegenheit des zweiten Endgeräts die Aufrufnachricht an das zweite Endgerät senden soll.

12. Erstes Endgerät (102), eine Hochfrequenzschaltung umfassend, wobei die Hochfrequenzschaltung eine Empfangseinheit und eine Sendeeinheit umfasst;
wobei die Sendeeinheit für Folgendes konfiguriert ist:
Senden einer ersten Nachricht an eine netzseitige Vorrichtung, wobei die erste Nachricht verwendet wird, um die netzseitige Vorrichtung aufzufordern, das erste Endgerät anzuweisen, ein zweites Endgerät aufzurufen, und das zweite Endgerät mit der netzseitigen Vorrichtung unter Verwendung des ersten Endgeräts verbunden ist, welches einen Relay-Dienst für das zweite Endgerät bereitstellt; und
Senden der ersten Nachricht an die netzseitige Vorrichtung unter Verwendung einer dritten Nachricht Msg3, die sich in einem Direktzugriffsvorgang befindet, wobei die dritte Nachricht Msg3 eine Funkressourcensteuerungsverbindungsanforderungs(RRCConnectionRequest)-Nachricht umfasst, ein Zielwert in einem Einrichtungsursache(EstablishmentCause)-Feld in der RRCConnectionRequest-Nachricht definiert ist, und der Zielwert die erste Nachricht ist;
wobei die Empfangseinheit konfiguriert ist, um eine zweite Nachricht zu empfangen, die durch die netzseitige Vorrichtung gesendet wird, wobei die zweite Nachricht verwendet wird, um das erste Endgerät anzuweisen, das zweite Endgerät aufzurufen; und
wobei die Sendeeinheit ferner konfiguriert ist, um eine Aufrufnachricht an das zweite Endgerät basierend auf der zweiten Nachricht zu senden.

13. Netzseitige Vorrichtung (101), umfassend einen Empfänger, einen Sender und einen Prozessor, wobei der Empfänger für Folgendes konfiguriert ist:
Empfangen einer ersten Nachricht, die durch ein erstes Endgerät gesendet wird, wobei die erste Nachricht verwendet wird, um die netzseitige Vorrichtung aufzufordern, das erste Endgerät anzuweisen, ein zweites Endgerät aufzurufen, und das zweite Endgerät mit der netzseitigen Vorrichtung unter Verwendung des ersten Endgeräts verbunden ist, welches einen Relay-Dienst für das zweite Endgerät bereitstellt; und
Empfangen der ersten Nachricht an die netzseitige Vorrichtung unter Verwendung einer dritten Nachricht Msg3, die sich in einem Direktzugriffsvorgang befindet, wobei die dritte Nachricht Msg3 eine Funkressourcensteuerungsverbindungsanforderungs(RRCConnectionRequest)-Nachricht umfasst, ein Zielwert in einem Einrichtungsursache(EstablishmentCause)-Feld in der RRCConnectionRequest-Nachricht definiert ist, und der Zielwert die erste Nachricht ist;
wobei der Prozessor konfiguriert ist, um eine zweite Nachricht zu erzeugen, die verwendet wird, um das erste Endgerät anzuweisen, das zweite Endgerät aufzurufen; und
wobei der Sender konfiguriert ist, um die zweite Nachricht an das erste Endgerät zu senden, sodass das erste Endgerät eine Aufrufnachricht an das zweite Endgerät basierend auf der zweiten Nachricht sendet.

## Revendications

1. Procédé de radiomessagerie, comprenant :
l'envoi (408), par un premier terminal, d'un premier message à un dispositif côté réseau, le premier message étant utilisé pour demander au dispositif côté réseau d'ordonner au premier terminal d'appeler un second terminal, et le second terminal étant connecté au dispositif côté réseau à l'aide du premier terminal fournissant un service de relais pour le second terminal ;
la réception (410), par le premier terminal, d'un deuxième message envoyé par le dispositif côté réseau, le deuxième message étant utilisé pour ordonner au premier terminal d'appeler le second terminal ; et
l'envoi (412), par le premier terminal, d'un message de radiomessagerie au second terminal sur la base du deuxième message,
**caractérisé en ce que** l'envoi, par un premier terminal, d'un premier message à un dispositif côté réseau comprend :
l'envoi, par le premier terminal, du premier message au dispositif côté réseau à l'aide (404) d'un troisième message Msg3 qui se trouve dans une procédure d'accès aléatoire, le troisième message Msg3 comprenant un message RRCConnectionRequest de demande de connexion de commande de ressources radio, une valeur cible est définie dans un champ establishmentCause de cause d'établissement, dans le message RRCConnectionRequest, et la valeur cible est le premier message.

2. Procédé selon la revendication 1, dans lequel, avant l'envoi, par un premier terminal, d'un premier message à un dispositif côté réseau, le procédé comprend en outre :
la configuration, par le premier terminal, d'un message de commande de ressources radio, RRC, cible, le message de commande de ressources radio, RRC, cible étant le premier message ; et
l'envoi, par un premier terminal, d'un premier message à un dispositif côté réseau comprend :
l'envoi, par le premier terminal, du message de commande de ressources radio, RRC, cible au dispositif côté réseau.

3. Procédé selon la revendication 1, dans lequel l'envoi, par un premier terminal, d'un premier message à un dispositif côté réseau comprend :
l'envoi, par le premier terminal, d'un élément de commande de commande d'accès au support cible, MAC CE, au dispositif côté réseau, le MAC CE cible étant le premier message.

4. Procédé selon l'une quelconque des revendications 1 à 2, dans lequel le premier message est utilisé pour indiquer une occasion à laquelle le premier terminal envoie le message de radiomessagerie et/ou une ressource sur laquelle le premier terminal envoie le message de radiomessagerie.

5. Procédé selon l'une quelconque des revendications 1 à 2, dans lequel le premier message est utilisé pour indiquer un identifiant du premier terminal et/ou une quantité de seconds terminaux.

6. Procédé selon l'une quelconque des revendications 1 à 3, dans lequel le premier message est utilisé pour indiquer que le premier terminal doit envoyer le message de radiomessagerie au second terminal lors d'une prochaine occasion de radiomessagerie du second terminal.

7. Procédé de radiomessagerie, comprenant :
la réception (408), par un dispositif côté réseau, d'un premier message envoyé par un premier terminal, le premier message étant utilisé pour demander au dispositif côté réseau d'ordonner au premier terminal d'appeler un second terminal, et le second terminal étant connecté au dispositif côté réseau à l'aide du premier terminal fournissant un service de relais pour le second terminal ;
la génération (409), par le dispositif côté réseau, d'un deuxième message qui est utilisé pour ordonner au premier terminal d'appeler le second terminal ; et
l'envoi (410), par le dispositif côté réseau, du deuxième message au premier terminal, de telle sorte que le premier terminal envoie un message de radiomessagerie au second terminal sur la base du deuxième message,
**caractérisé en ce que** la réception, par un dispositif côté réseau, d'un premier message envoyé par un premier terminal comprend :
la réception, par le dispositif côté réseau, du premier message envoyé par le premier terminal à l'aide (404) d'un troisième message Msg3 qui se trouve dans une procédure d'accès aléatoire, le troisième message Msg3 comprenant un message RRCConnectionRequest de demande de connexion de commande de ressources radio, une valeur cible est définie dans un champ establishmentCause de cause d'établissement, du message RRCConnectionRequest, et la valeur cible est le premier message.

8. Procédé selon la revendication 7, dans lequel la réception, par un dispositif côté réseau, d'un premier message envoyé par un premier terminal comprend :
la réception, par le dispositif côté réseau, d'un élément de commande de commande d'accès au support, MAC CE, cible envoyé par le premier terminal, l'élément de commande de commande d'accès au support, MAC CE, cible étant le premier message.

9. Procédé selon la revendication 7, dans lequel le premier message est utilisé pour indiquer une occasion de radiomessagerie à laquelle le premier terminal envoie le message de radiomessagerie et/ou une ressource de radiomessagerie sur laquelle le premier terminal envoie le message de radiomessagerie.

10. Procédé selon la revendication 7, dans lequel le premier message est utilisé pour indiquer un identifiant du premier terminal et/ou une quantité de seconds terminaux.

11. Procédé selon l'une quelconque des revendications 7 à 8, dans lequel le premier message est utilisé pour indiquer que le premier terminal doit envoyer le message de radiomessagerie au second terminal lors d'une prochaine occasion de radiomessagerie du second terminal.

12. Premier terminal (102), comprenant un circuit de radiofréquence, le circuit de radiofréquence comprenant une unité de réception et une unité d'envoi ;
l'unité d'envoi est en outre configurée pour :
envoyer un premier message à un dispositif côté réseau, le premier message étant utilisé pour demander au dispositif côté réseau d'ordonner au premier terminal d'appeler un second terminal, et le second terminal étant connecté au dispositif côté réseau à l'aide du premier terminal en fournissant un service de relais pour le second terminal ; et
envoyer le premier message au dispositif côté réseau à l'aide d'un troisième message Msg3 qui se trouve dans une procédure d'accès aléatoire, dans lequel le troisième message Msg3 comprend un message RRCConnectionRequest de demande de connexion de commande de ressources radio, une valeur cible est définie dans un champ establishmentCause de cause d'établissement, dans le message RRCConnectionRequest, et la valeur cible est le premier message ;
l'unité de réception est configurée pour recevoir un deuxième message envoyé par le dispositif côté réseau, le deuxième message étant utilisé pour ordonner au premier terminal d'appeler le second terminal ; et
l'unité d'envoi est en outre configurée pour envoyer un message de radiomessagerie au second terminal sur la base du deuxième message.

13. Dispositif côté réseau (101), comprenant un récepteur, un émetteur et un processeur, le récepteur étant configuré pour :
recevoir un premier message envoyé par un premier terminal, le premier message étant utilisé pour demander au dispositif côté réseau d'ordonner au premier terminal d'appeler un second terminal, et le second terminal étant connecté au dispositif côté réseau à l'aide du premier terminal en fournissant un service de relais pour le second terminal ; et
recevoir le premier message au dispositif côté réseau à l'aide d'un troisième message Msg3 qui se trouve dans une procédure d'accès aléatoire, dans lequel le troisième message Msg3 comprend un message RRCConnectionRequest de demande de connexion de commande de ressource radio, une valeur cible est définie dans un champ establishmentCause de cause d'établissement, dans le message RRCConnectionRequest, et la valeur cible est le premier message ;
le processeur est configuré pour générer un deuxième message qui est utilisé pour ordonner au premier terminal d'appeler le second terminal ; et
l'émetteur est configuré pour envoyer le deuxième message au premier terminal, de sorte que le premier terminal envoie un message de radiomessagerie au second terminal sur la base du deuxième message.
